# EUROPEAN PATENT APPLICATION

(11) **EP 4 535 620 A1**
(43) Date of publication of application: **09.04.2025**
(21) Application number: 23811543.0
(22) Date of filing: 25.04.2023
(51) Int. Cl.: H02K 1/2798, H02K 16/02

(54) **AXIAL GAP TYPE ROTATING ELECTRIC MACHINE AND METHOD FOR MANUFACTURING SAME**

(30) Priority: 24.05.2022 JP 2022084602
(71) Applicant: DENSO CORPORATION, Kariya-city, Aichi 448-8661 (JP)
(72) Inventor: TANAKA Naoki, Kariya-city, Aichi 448-8661 (JP); MAKINO Takashi, Kariya-city, Aichi 448-8661 (JP)
(74) Representative: Kuhnen & Wacker Patent- und Rechtsanwaltsbüro PartG mbB
(86) International application number: PCT/JP2023/016280
(87) International publication number: WO 2023/228665

(57) **Abstract**

An axial gap type rotary electric machine includes a rotor and a stator. The rotor has a support plate (10) and a permanent magnet (20) disposed on the support plate (10). The support plate (10) includes an inner core (40). The inner core (40) includes a plurality of vertical walls (42). The plurality of vertical walls (42) are disposed in a radial shape. The plurality of vertical walls (42) are disposed in a rotationally symmetrical with respect to a central axis. The plurality of vertical walls (42) are positioned behind the permanent magnet (20). The plurality of vertical walls (42) function as members that resist axial force and radial force acting on the permanent magnet (20).

## Description

### [CROSS REFERENCE TO RELATED APPLICATION]

The present application is based on and claims the benefit of priority from Japanese Patent Application No. 2022-84602 filed on May 24, 2022, the entire disclosure of the above application is incorporated herein by reference.

### [TECHNICAL FIELD]

The disclosure in this specification relates to an axial gap type rotary electric machine and a manufacturing method thereof.

### [BACKGROUND]

Patent Literature 1 discloses an axial gap motor. The motor includes a rotor having permanent magnets. The permanent magnets are supported by a rotor support. The rotor has a configuration in which the rotor support and the permanent magnets are sandwiched between two reinforcing members. The reinforcing members are plate-shaped members. The disclosure of Patent Literature is incorporated herein by reference to explain technical elements described herein.

### [PRIOR ART LITERATURE]

### [PATENT LITERATURE]

Patent Literature 1: JP2021-136777A

### [SUMMARY]

In the configuration of Patent Literature, a surface of a permanent magnet is covered with a reinforcing member that provides strength to the rotor. The reinforcing member is located in an axial gap. As a result, the reinforcing members may limit performance. For example, the reinforcing member may increase a distance in the axial gap. Additionally, the reinforcing member may reduce magnetic flux in the axial gap. Furthermore, there is a lower limit to a thickness of the reinforcing member from a viewpoint of the strength required for the rotor. Further improvement is demanded on the axial gap type rotary electric machine in the above-mentioned viewpoint, or in another viewpoint not mentioned.

It is a disclosed object to provide an axial gap type rotary electric machine including a lightweight rotor in which an adverse effect to the magnetic flux in the axial gap is suppressed, and a manufacturing method thereof.

An axial gap type rotary electric machine disclosed herein, comprises: a stator and a rotor which are magnetically coupled in an axial gap in an axial direction, wherein the rotor includes: a permanent magnet disposed to face the axial gap; and a support plate disposed behind the permanent magnet, wherein the support plate is positioned behind the permanent magnet, is disposed in a rotational symmetry with respect to a central axis of the rotor, and has a plurality of vertical walls extending in the axial direction.

According to the disclosed axial gap type rotary electric machine, a force acting on the permanent magnets is received by the vertical wall. As a result, the axial gap type rotary electric machine including a lightweight rotor in which an adverse effect to the magnetic flux in the axial gap is suppressed is provided.

A method of manufacturing the axial gap type rotary electric machine disclosed herein, the method comprises: assembling the support plate; connecting the support plate and the permanent magnet to assemble the rotor; and assembling the rotary electric machine by facing the rotor and the stator at the axial gap, wherein the step of assembling the support plate includes: stacking step of stacking a plurality of strips so as to be joined by a plurality of joining layers; expanding step of expanding the plurality of strips from a stacked member obtained by the stacking step in a circumferential direction while bending the plurality of strips to form an inner core having an annular shape; and step of joining the inner core and an end plate.

The disclosed aspects in this specification adopt different technical solutions from each other in order to achieve their respective objectives. Reference numerals in parentheses described in claims and this section exemplarily show corresponding relationships with parts of embodiments to be described later and are not intended to limit technical scopes. The objectives, features, and effects disclosed herein are further clarified by reference to the subsequent detailed description and accompanying drawings.

### [BRIEF DESCRIPTION OF DRAWINGS]

FIG. 1 is a partial exploded perspective view of an electrically powered equipment according to a first embodiment.
FIG. 2 is a perspective view of a support plate.
FIG. 3 is an exploded perspective view of the support plate.
FIG. 4 is a cross-sectional view showing a cross section of an inner core.
FIG. 5 is an exploded cross-sectional view of a support plate.
FIG. 6 is an exploded perspective view of a support plate according to a second embodiment.
FIG. 7 is an exploded cross-sectional view of a support plate.
FIG. 8 is an exploded cross-sectional view of a support plate according to a third embodiment.
FIG. 9 is an exploded cross-sectional view of a support plate according to a fourth embodiment.
FIG. 10 is a cross-sectional view of an inner core according to a fifth embodiment.
FIG. 11 is a cross-sectional view of an inner core according to a sixth embodiment.
FIG. 12 is a cross-sectional view of an inner core according to a seventh embodiment.
FIG. 13 is a cross-sectional view of an inner core according to an eighth embodiment.
FIG. 14 is a cross-sectional view of an inner core according to a ninth embodiment.
FIG. 15 is a cross-sectional view of an inner core according to a tenth embodiment.
FIG. 16 is a cross-sectional view of an inner core according to an eleventh embodiment.
FIG. 17 is a cross-sectional view of an inner core according to a twelfth embodiment.
FIG. 18 is a cross-sectional view of an inner core according to a thirteenth embodiment.
FIG. 19 is a cross-sectional view showing a manufacturing step of an inner core.

### [DETAILED DESCRIPTION]

A plurality of embodiments are described with reference to the drawings. In some embodiments, functionally and/or structurally corresponding and/or associated elements may be given the same reference numerals, or reference numerals with different digit placed on equal to or higher than a hundred place. With respect to the parts that correspond to or are associated with each other, explanations thereof can be shared among the embodiments. Some figures are somewhat exaggerated to facilitate understanding of the shape, function and interrelationships of the various elements of the device.

### First Embodiment

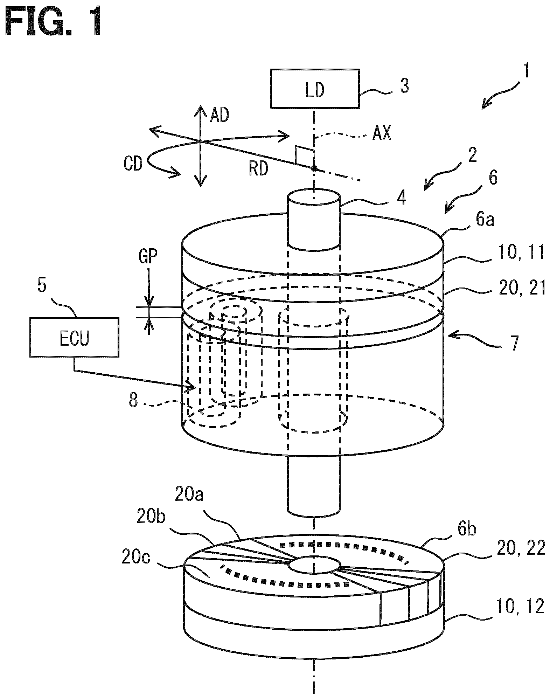

In FIG. 1, an electrically powered device 1 is shown in a partially exploded perspective view. The electrically powered equipment 1 includes a rotary electric machine 2, a rotary equipment 3 (LD), and a shaft 4. The rotary electric machine 2 is an axial gap type rotary electric machine. The rotary electric machine 2 is a motor. The rotary electric machine 2 may be a generator or a motor-generator. The shaft 4 is supported in a rotatable manner in the electrically powered device 1 or in an equipment to which the electrically powered device 1 is applied. The rotary electric machine 2 is connected to the rotary equipment 3 via a shaft 4. In this embodiment, the rotary electric machine 2 and the rotary equipment 3 are directly connected by the shaft 4. The rotary electric machine 2 and the rotary equipment 3 may be indirectly coupled to each other via a gear mechanism or a coupling equipment using a fluid mechanism.

The rotary equipment 3 is a device that rotates together with the rotary electric machine 2. The rotary equipment 3 may be a load that is rotated by the rotary electric machine 2 in an activated state. The rotary equipment 3 may be a power source that rotates the rotary electric machine 2 in an activated state.

The rotary equipment 3 is provided in a stationary equipment or a movable equipment. The stationary equipment may be a blower, a water pump, a conveying device, and the like. The rotary equipment 3 may be a fan, a pump, or the like. The movable equipment may be a vehicle, an aircraft, a watercraft, or the like. The rotary equipment 3 in the movable equipment may be a propulsion device of the movable equipment. The propulsion device may be wheels, propellers, etc. The rotary equipment 3 in the movable equipment may be a load of a device called an auxiliary device in the movable equipment. In this case, the rotary equipment 3 may be, e.g., a wiper, a fan, a pump, or the like. In this embodiment, the rotary equipment 3 is, e.g., an aircraft propeller.

The electrically powered device 1 includes a control device 5 (ECU). The control device 5 controls a state of current supply to coils of the rotary electric machine 2. The control device 5 may be referred to as an electronic control device (ECU: Electronic Control Unit). The control device or a control system is provided by (a) an algorithm as a plurality of logic called an if-then-else form, or (b) a learned model tuned by machine learning, e.g., an algorithm as a neural network.

The control device is provided by a control system including at least one computer. The control system may include a plurality of computers linked by data communication devices. The computer includes at least one processor (hardware processor) that is hardware. The hardware processor may be at least one processor core that executes a program stored in at least one memory. The memory may be also referred to as a storage medium. The memory is a non-transitory and tangible storage medium, which non-temporarily stores a program and/or data readable by the processor. The hardware processor may be a hardware logic circuit. In this case, the computer is provided by a digital circuit including a number of programmed logic units (gate circuits). The digital circuit is also called a logic circuit array, e.g., ASIC: Application-Specific Integrated Circuit, FPGA: Field Programmable Gate Array, etc. The digital circuit may comprise a memory storing programs and/or data. The computer may be provided by an analog circuit. The computer may be provided by a combination of a digital circuit and an analog circuit.

The rotary electric machine 2 includes a rotor 6 and a stator 7. In the following description, a three-axis orthogonal coordinate system is defined based on a central axis AX of the shaft 4. The direction parallel to the central axis AX is called an axial direction AD. A direction perpendicular to the central axis AX is called a radial direction RD. A direction around the central axis AX is called a circumferential direction CD. The circumferential direction CD is also called a tangential direction.

The rotor 6 and the stator 7 are magnetically coupled to each other through an axial gap in the axial direction AD. The rotor 6 and the stator 7 rotate relative to each other. The rotor 6 and the stator 7 are disposed in a stacking manner with respect to the axial direction AD. The rotor 6 and the stator 7 are spaced apart from each other in the axial direction AD via an air gap GP. The rotor 6 and the stator 7 face each other in the axial direction AD via the air gap GP. A magnetic flux passes through the air gap GP.

The rotor 6 is connected to the shaft 4. The rotor 6 includes a support plate 10 and a permanent magnet 20. The permanent magnet 20 is disposed to face the axial air gap. The support plate 10 is disposed behind the permanent magnet 20.

The support plate 10 is a circular-plate shaped member. The support plate 10 is connected to the shaft 4 at an inner portion in the radial direction RD. The support plate 10 supports the permanent magnet 20. The support plate 10 is a member that supports the permanent magnet 20. The support plate 10 is disposed behind the permanent magnet 20 in the rotary electric machine 2. Behind indicates a side of the permanent magnet 20 opposite to the air gap GP in the axial direction AD.

The support plate 10 provides a strength in the axial direction AD required for the rotor 6. The support plate 10 provides a strength in the radial direction RD required for the rotor 6. The support plate 10 provides a strength in the circumferential direction CD required for the rotor 6. The support plate 10 is a main member that provides mechanical strength to the rotor 6. The support plate 10 has a strength to hold the permanent magnet 20 in a specified position against a force acting on the permanent magnet 20 in the axial direction AD. The support plate 10 has a strength to hold the permanent magnet 20 in a specified position against a force acting on the permanent magnet 20 in the radial direction RD. The support plate 10 has a strength to hold the permanent magnet 20 in a specified position against a force acting on the permanent magnet 20 in the circumferential direction CD.

The support plate 10 may be made of a magnetic material. The support plate 10 may be made of a non-magnetic material. For example, the support plate 10 may be provided by aluminum or an aluminum alloy. For example, the support plate 10 may be provided by carbon fiber reinforced plastic. For example, the support plate 10 may be made of a composite material of an aluminum alloy and carbon fiber reinforced plastic.

The permanent magnet 20 may be a single body having a plurality of permanent magnet portions, or a connected body in which a plurality of permanent magnet portions are connected together. The permanent magnet 20 has a plurality of magnetic poles 20a and 20b arranged alternately along the circumferential direction CD. The plurality of magnetic poles 20a and 20b provide, e.g., the north pole and the south pole. The permanent magnet 20 has a plurality of magnetic poles positioned and magnetized so as to face the magnetic poles of the stator 7 in the axial direction AD. As a result, the plurality of magnetic poles of the rotor 6 appear on the end surface of the rotor 6 as an annular row arranged along the circumferential direction CD. The surface of the permanent magnet 20 is covered with a protective member 20c. The protective member 20c chemically protects the permanent magnet 20. The protective member 20c is provided by a protective layer that is thinner than the support plate 10. The protective member 20c is positioned in the air gap GP. However, the protective member 20c is clearly thinner than the support plate 10, and has a very small effect on the magnetic flux.

Due to an electromagnetic force acting between the magnetic poles of the permanent magnet 20 and the magnetic poles of the stator 7, a force acts on the permanent magnet 20 in the axial direction CD. Due to an electromagnetic force acting between the magnetic poles of the permanent magnet 20 and the magnetic poles of the stator 7, a force acts on the permanent magnet 20 in the circumferential direction CD.

In this embodiment, the rotary electric machine 2 includes a first rotor 6a and a second rotor 6b on either side of the stator 7 in the axial direction AD. The first rotor 6a and the second rotor 6b rotate relatively at both ends of a common stator 7. In drawings, the second rotor 6b is shown in an exploded state.

The first rotor 6a includes a support plate 11 and a permanent magnet 21. The second rotor 6b includes a support plate 12 and a permanent magnet 22. The first rotor 6a and the second rotor 6b are disposed on both ends of the stator 7. The first rotor 6a and the second rotor 6b have support plates 11 and 12 positioned at both ends of the rotary electric machine 2 in the axial direction AD. The first rotor 6a and the second rotor 6b are positioned such that the permanent magnets 21 and 22 face both end surfaces of the stator 7.

The stator 7 is supported in a stable manner in the electrically powered device 1 or in an equipment to which the electrically powered device 1 is applied. The stator 7 has a plurality of coils 8 for providing magnetic poles on its end surfaces in the axial direction AD. The plurality of coils 8 may include coils having a coil axis parallel to the axial direction AD. A plurality of coils 8 are arranged in an annular shape along the circumferential direction CD within the stator 7. As a result, during operation, the plurality of magnetic poles of the stator 7 appear on the end surface of the stator 7 as an annular row arranged along the circumferential direction CD. Current supply to the plurality of coils 8 is controlled by the control device 5.

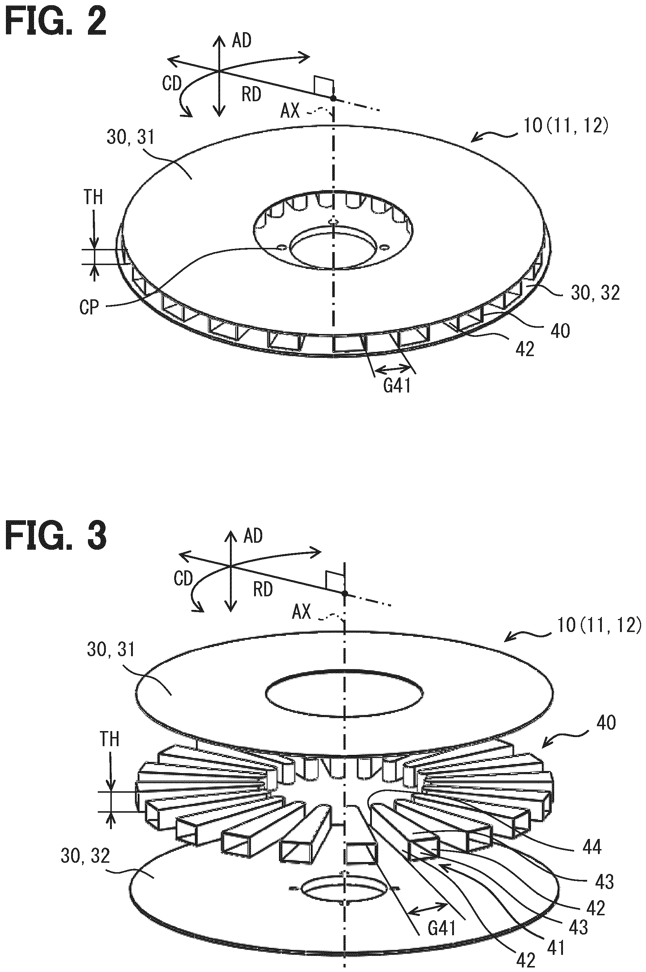

In FIG. 2, the support plate 10 is a circular-plate shaped member. The support plate 10 has a connecting portion CP for connecting with the shaft 4. The connecting portion CP is provided by a flange portion and bolt holes that are fastened to a flange portion of the shaft 4 by fastening members such as bolts.

The support plate 10 includes an end plate 30 and an inner core 40. The end plate 30 is a circular-plate shaped member having an opening at a center thereof. The support plate 10 has one end surface and the other end surface. The end plate 30 includes a first plate 31 that provides one end surface of the support plate 10. The end plate 30 includes a second plate 32 that provides the other one end surface of the support plate 10. The inner core 40 has a plurality of vertical walls 42 for defining a thickness TH. The vertical wall 42 extends in the axial direction AD to provide a thickness TH of the support plate 10. The vertical wall 42 is approximately perpendicular to the end plate 30. Note that the word vertical here is not mathematically vertical. The word perpendicular should be interpreted as allowing industry tolerances. The vertical wall 42 connects the first plate 31 and the second plate 32 in the thickness TH direction. A direction of the thickness TH is the axial direction AD. The plurality of vertical walls 42 are provided to define gaps G41 in the circumferential direction CD. The plurality of vertical walls 42 are provided to define equal intervals in the circumferential direction CD.

The plurality of vertical walls 42 have a height that defines the thickness TH, and are arranged to define the gaps G41 in the circumferential direction CD. As a result, a volume chamber having a predetermined volume is defined between the plurality of vertical walls 42. Therefore, a lightweight support plate 10 is provided compared to a case in which an entire thickness TH is provided by a material of the end plate 30.

In FIG. 3, the support plate 10 includes the end plate 30 and the inner core 40. The end plate 30 and the inner core 40 are disposed in a stacking manner and joined together. The joining may be provided by adhesive bonding, welding, riveting, brazing with a brazing material, or the like.

The inner core 40 is formed by positioning a plurality of cylindrical members 41 in a radial shape. The inner core 40 is positioned between the first plate 31 and the second plate 32 and joined to the first plate 31 and the second plate 32.

The cylindrical member 41 is a square tube. The cylindrical member 41 is disposed between an inner surface of the first plate 31 and an inner surface of the second plate 32 so as to extend along these inner surfaces. The cylindrical member 41 has a polygonal cross section in a plane perpendicular to the radial direction RD. The cylindrical member 41 has a quadrilateral cross section in a plane perpendicular to the radial direction RD. The cylindrical member 41 has a cross-sectional shape that is a long, continuous cylinder in the radial direction RD. The cylindrical member 41 is disposed along the radial direction RD. The plurality of cylindrical members 41 are arranged on the support plate 10 in a radial shape. The plurality of cylindrical members 41 are arranged in an annular shape along the circumferential direction CD. The plurality of cylindrical members 41 are arranged with gaps G41 between them. The gap G41 corresponds to a predetermined angle range with respect to the central axis AX. The gap G41 is also called an angle range G41.

If the gap G41 is open to an inside and an outside in the radial direction RD, it may function as a passage for air to cool the rotor 6. The air flowing through the gap G41 flows from an inside to an outside in the radial direction RD. The gap G41 may contribute to suppressing the temperature of the rotor 6.

The cylindrical member 41 has a vertical wall 42 and a lateral wall 43. The cylindrical member 41 has a pair of vertical walls 42 and a pair of lateral walls 43. The pair of vertical walls 42 are positioned to face each other in the circumferential direction CD. The pair of lateral walls 43 are positioned to face each other in the axial direction AD. The vertical wall 42, the lateral wall 43, the vertical wall 42, and the lateral wall 43 are connected in this order to form a cylindrical shape.

A cavity within the cylindrical member 41 may function as a passage for air to cool the rotor 6. The air flowing through the cavity of the cylindrical member 41 flows from an inside to an outside in the radial direction RD. The cavity of the cylindrical member 41 may contribute to suppressing a temperature of the rotor 6.

The cylindrical member 41 has both ends. One end is positioned at an outer end portion of the support plate 10 in the radial direction RD. The outer end portion is an open end. The other one end is positioned at an inner end portion of the support plate 10 in the radial direction RD. The inner end portion is closed by an end wall 44. The end wall 44 is a wall that extends in a linear shape along the axial direction AD. The end wall 44 is curved along the circumferential direction CD so as to be convex from an outer side to an inner side in the radial direction RD. Alternatively, the cylindrical member 41 may not include an end wall 44. In this case, the cylindrical member 41 is a cylindrical member having both ends open. Furthermore, both the outer end portion and the inner end portion of the cylindrical member 41 may be closed ends. In this case, the cylindrical member 41 has end walls 44 on both ends. Additionally, the outer end portion may be a closed end and the inner end portion may be an open end. In this case, the cylindrical member 41 has an end wall 44 only at the outer end portion.

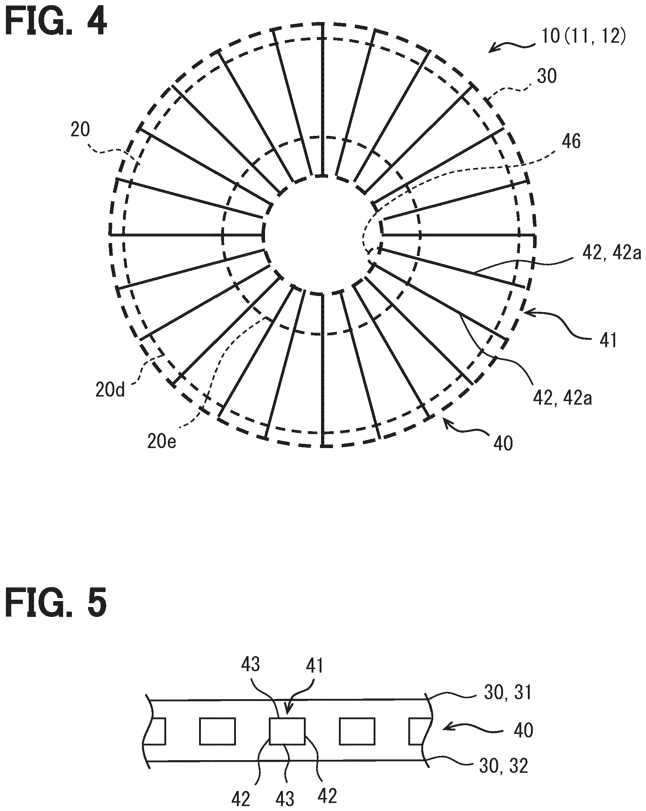

In FIG. 4, a cross section of the support plate 10 is shown. In this drawing, the area in which the permanent magnet 20 is disposed and fixed is indicated by dashed lines. The end plates 30 are shown in dashed lines. Each vertical wall 42 extends along the radial direction RD. As a result, the plurality of vertical walls 42 extend in a radial shape. The plurality of vertical walls 42 are disposed in a radial shape. In the support plate 10, the vertical wall 42 is positioned behind the area in which the permanent magnet 20 is installed. As a result, a force acting on the permanent magnet 20 may be received by the vertical wall 42. The plurality of vertical walls 42 function as members that resist a force acting on the permanent magnet 20 in the radial direction RD. The plurality of vertical walls 42 function as members that resist a force acting on the permanent magnet 20 in the radial direction RD.

The plurality of vertical walls 42 are distributed in a rotational symmetry with respect to the central axis AX. Any one of the vertical walls 42 is in a rotational symmetry with respect to another one of the vertical walls 42 that is positioned at a position shifted by a predetermined rotation angle with respect to the central axis AX as the center of rotation. Note that the rotational symmetry here is not intended to be mathematically precise. The rotational symmetry encompasses tolerances that are acceptable in industry. For example, any one of the vertical walls 42 may have another vertical wall 42 that is in a rotational symmetry with respect to the other vertical wall 42 located within a predetermined error range.

The plurality of vertical walls 42 present at both an inner portion of the support plate 10 in the radial direction RD and an outer portion of the support plate 10 in the radial direction RD. One of the vertical walls 42 occupies a predetermined cross-sectional area that is equal at both an outer portion and an inner portion. The vertical walls 42 of n pieces present at a cylindrical cross section extending in the axial direction AD at an inner portion of the support plate 10 in the radial direction RD. The vertical walls 42 of n pieces present at a cylindrical cross section extending in the axial direction AD at an outer portion of the support plate 10 in the radial direction RD. The number of vertical walls 42 is the same in both the inner portion and the outer portion. However, a surface area of an outer cylindrical cross section is greater than a surface area of an inner cylindrical cross section. Therefore, an occupying ratio of the plurality of vertical walls 42 in the outer cylindrical cross section is lower than an occupying ratio of the plurality of vertical walls 42 in the inner cylindrical cross section. For example, it is possible to image an outer cylindrical cross section extending in the axial direction AD at an outer end 20d of a range where the permanent magnet 20 presents. Similarly, it is possible to image an inner cylindrical cross section extending in the axial direction AD at an inner end 20e of a range where the permanent magnet 20 presents. The total occupation area of the vertical walls 42 in the outer cylindrical cross section is lower than the total occupation area of the vertical walls 42 in the inner cylindrical cross section. This provides a necessary strength in an inner portion where stress that bends the support plate 10 in the axial direction AD tends to concentrate.

In this embodiment, all of the plurality of vertical walls 42 are the plurality of radial vertical walls 42a extending along the radial direction RD. The plurality of radial vertical walls 42a form predetermined gaps G41 in the circumferential direction CD. This gaps G41 are narrow at an inner portion in the radial direction RD and are wide at an outer portion in the radial direction RD. In other words, the gap G41 at the inner portion in the radial direction RD is narrower than the gap G41 at the outer portion in the radial direction RD. A relationship of the gaps in the circumferential direction CD between the plurality of radial vertical walls is provided in common to a plurality of embodiments described in this specification.

In FIG. 5, a relationship between the cylindrical member 41, the first plate 31, and the second plate 32 in the support plate 10 is illustrated in a modeled form. FIG. 5 shows a cylindrical cross section of the support plate 10 extending in the axial direction AD near a center in the radial direction RD. The vertical wall 42 provided by the cylindrical member 41 works as a beam member between the first plate 31 and the second plate 32. The lateral wall 43 provided by the cylindrical member 41 is positioned parallel to the first plate 31 or the second plate 32. Furthermore, the lateral wall 43 provided by the cylindrical member 41 is joined to the first plate 31 or the second plate 32. This allows the cylindrical member 41 to be firmly joined to the first plate 31 or the second plate 32. As a result, the vertical wall 42 is also firmly joined to the first plate 31 or the second plate 32.

The manufacturing method of the electrically powered device 1 includes a step of preparing the rotary equipment 3, a step of assembling the rotary electric machine 2, and a step of connecting the rotary electric machine 2 and the rotary equipment 3 together. The step of assembling the rotary electric machine 2 includes a step of assembling the rotor 6, a step of assembling the stator 7, and a step of assembling the rotary electric machine 2 with the rotor 6 and the stator 7.

The step of assembling the rotor 6 includes a step of assembling the support plate 10, a step of preparing the permanent magnet 20, and a step of assembling the rotor 6 by connecting the support plate 10 and the permanent magnet 20.

The step of assembling the support plate 10 includes the steps of preparing the end plates 30, preparing the inner core 40, and joining the end plates 30 and the inner core 40 together. The step of preparing the inner core 40 includes a step of forming a plurality of cylindrical members 41, a step of disposing the plurality of cylindrical members 41 in a radial shape, and a connecting step of connecting the plurality of cylindrical members 41 to the end plates 30. The connecting step includes a disposing step the plurality of cylindrical members 41 between the first plate 31 and the second plate 32 in a sandwiching manner, and a joining step of joining the plurality of cylindrical members 41 to the first plate 31 and the second plate 32. The step of assembling the rotary electric machine 2 includes a step of assembling the rotor 6 and the stator 7 so as to face each other across the axial air gap, and assembling them into the rotary electric machine 2.

According to the embodiment described above, the support plate 10 that supports the permanent magnet 20 behind the permanent magnet 20 is provided. The support plate 10 includes a plurality of vertical walls 42. The plurality of vertical walls 42 are disposed in a radial shape. The plurality of vertical walls 42 are arranged in a rotational symmetry about the central axis AX. As a result, a support plate 10 that is lightweight and has high strength is provided. The vertical wall 42 of the support plate 10 is disposed behind an area in which the permanent magnet 20 is disposed. As a result, the force acting on the permanent magnet 20 is received by the vertical wall 42. The axial gap type rotary electric machine 2 includes the rotor 6 that satisfies a required and necessary strength and is lightweight. As a result, the axial gap type rotary electric machine including a lightweight rotor 6 in which an adverse effect to the magnetic flux in the axial gap is suppressed is provided.

### Second Embodiment

This embodiment is a modified embodiment of the preceding embodiment which is provided as a basic embodiment. In the above embodiment, the plurality of cylindrical members 41 are disposed to define the predetermined gaps G41. Alternatively, in this embodiment, the plurality of cylindrical members 41 are densely arranged in the circumferential direction CD.

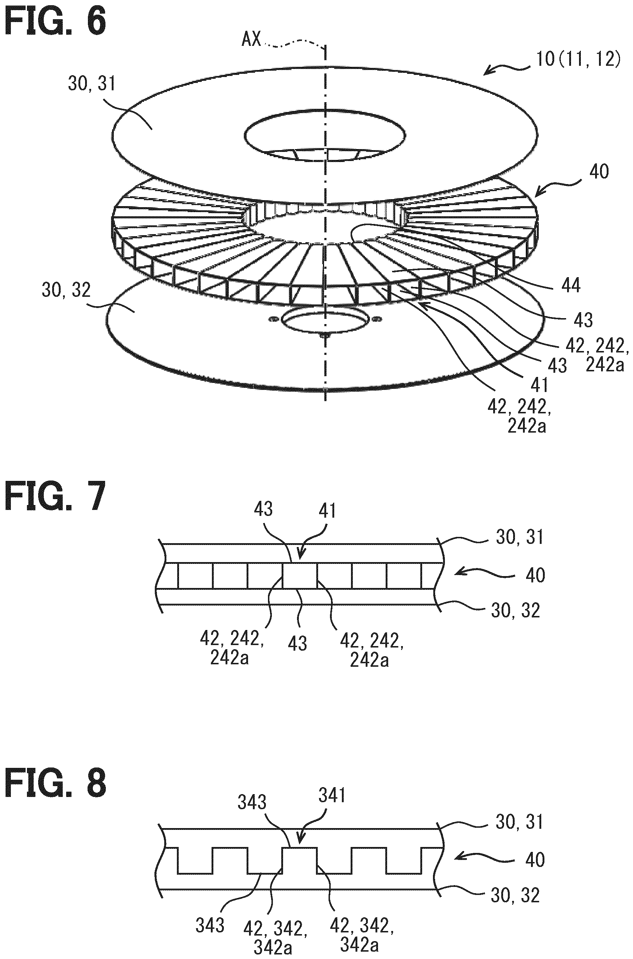

In FIG. 6 and FIG. 7, the inner core 40 includes a plurality of cylindrical members 41. The cylindrical member 41 has a vertical wall 242 that come in contact with another adjacent cylindrical member 41. The vertical wall 242 of one cylindrical member 41 is disposed in contact with the vertical wall 242 of another adjacent cylindrical member 41. The vertical wall 242 of one cylindrical member 41 may be joined to the vertical wall 242 of another adjacent cylindrical member 41.

In this embodiment, more vertical walls 242 are disposed between the first plate 31 and the second plate 32 than in the first embodiment. Specifically, a total number of the vertical walls 242 in the second embodiment may reach twice the total number of the vertical walls 42 in the first embodiment. In this embodiment, all of the plurality of vertical walls 242 are the plurality of radial vertical walls 242a extending along the radial direction RD. In this embodiment as well, the plurality of vertical walls 42 are provided by the plurality of vertical walls 242. In this embodiment as well, the same effects as those of the preceding embodiment may be obtained.

### Third Embodiment

This embodiment is a modified embodiment of the preceding embodiment which is provided as a basic embodiment. In the above embodiment, the inner core 40 is provided by a plurality of cylindrical members 41. Alternatively, the inner core 40 is provided by a plate-shaped member 341 having a cross-sectional shape similar to a rectangular wave in this embodiment.

In FIG. 8, the inner core 40 includes a plate-shaped member 341. The plate-shaped member 341 is a member having an annular shape. The plate-shaped member 341 has a cross section that may be called a rectangular wave shape or a pulse wave shape at a cross section of the cylindrical shape. The plate-shaped member 341 has a cross-sectional shape in which a lateral wall 343, a vertical wall 342, a lateral wall 343, and a vertical wall 342 are arranged repeatedly in the circumferential direction CD. The lateral wall 343 is disposed parallel to and joined to the first plate 31 or the second plate 32. The plate-shaped member 341 provides a cross-sectional shape similar to the plurality of vertical walls 42 shown in FIG. 4.

In this embodiment, the inner core 40 is provided by a smaller number of plate-shaped members 341 than the plurality of cylindrical members 41. In this embodiment, all of the plurality of vertical walls 342 are the plurality of radial vertical walls 342a extending along the radial direction RD. In this embodiment as well, the plurality of vertical walls 42 are provided by the plurality of vertical walls 342. In this embodiment as well, the same effects as those of the preceding embodiment may be obtained.

### Fourth Embodiment

This embodiment is a modified embodiment of the preceding embodiment which is provided as a basic embodiment. In the above embodiment, the inner core 40 is provided by a plurality of cylindrical members 41 or plate-shaped members 341. Alternatively, in this embodiment, the inner core 40 is provided by a plurality of strip members 441.

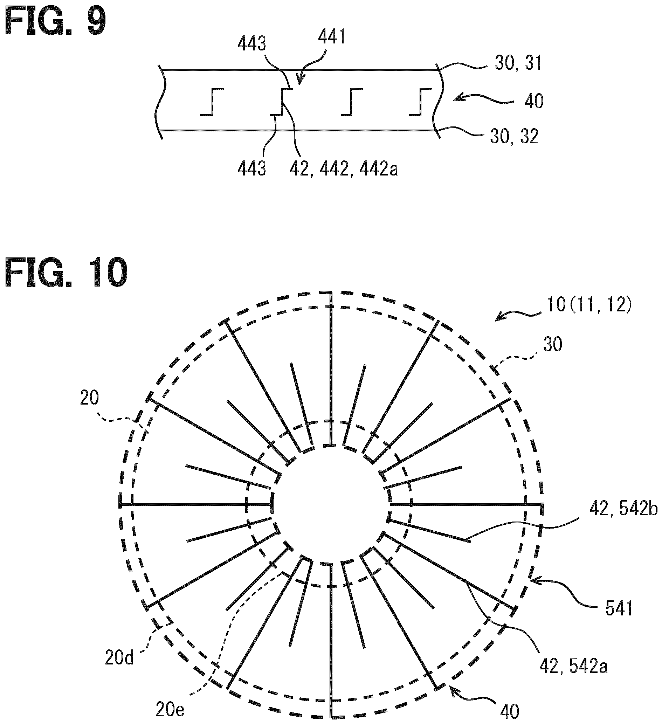

In FIG. 9, the inner core 40 includes a plurality of strip members 441. Each strip member 441 is a strip-shaped member extending in the radial direction RD. Each strip member 441 has a lateral wall 443, a vertical wall 442 and another lateral wall 443. The two lateral walls 443 are disposed to form crank shapes with respect to a single one of the vertical wall 442. One of the lateral walls 443 is disposed so as to extend in one direction from one end of the vertical wall 442 in the axial direction AD. The other one of the lateral walls 443 is disposed so as to extend in the other direction from the other end of the vertical wall 442 in the axial direction AD. The word other direction is an opposite direction to the one direction. The lateral wall 443 is disposed parallel to and joined to the first plate 31 or the second plate 32. The plurality of strip members 441 provide a cross-sectional shape similar to the plurality of vertical walls 42 shown in FIG. 4 by a plurality of vertical walls 442. The vertical wall 442 and the two lateral walls 443 of the strip member 441 may be disposed in a bracket shape instead of in a crank shape. Also, the strip member 441 may have only the vertical wall 442 without the lateral wall 443. In this case, the end surface of the vertical wall 442 is disposed so as to come into contact with the end plate 30, and the end surface of the vertical wall 442 is joined to the end plate 30.

The plurality of strip members 441 may be manufactured by a step of folding both longitudinal sides of a strip-shaped material by a predetermined width. Therefore, it is possible to manufacture the plurality of vertical walls 442 easily and at low cost in a mass-production manner. In this embodiment, all of the plurality of vertical walls 442 are a plurality of radial vertical walls 442a extending along the radial direction RD. In this embodiment as well, the plurality of vertical walls 42 are provided by the plurality of vertical walls 442. In this embodiment as well, the same effects as those of the preceding embodiments may be obtained.

### Fifth Embodiment

This embodiment is a modified embodiment of the preceding embodiment which is provided as a basic embodiment. In the above embodiments, the plurality of vertical walls 42 extend long from the inner end to the outer end along the radial direction RD. Alternatively, in this embodiment, the plurality of vertical walls 42 include inner short vertical walls 542b disposed in only a partial range of the radial direction RD of the support plate 10. The inner short vertical wall 542b is provided only in an inner range of the support plate 10 in the radial direction RD.

In FIG. 10, the inner core 40 includes one or more wall members 541. The wall member 541 provides a plurality of vertical walls 42. The wall member 541 may be provided by a cylindrical member, a plate-shaped member, or a strip member. The vertical walls 42 include a plurality of long vertical walls 542a and a plurality of inner short vertical walls 542b. The long vertical wall 542a extends in a long distance from the inner end to the outer end along the radial direction RD. The inner short vertical wall 542b extends in a short distance from the inner end to an intermediate position along the radial direction RD. The intermediate position may be set on a center in the radial direction RD. The intermediate position may be set on an outer side than the center in the radial direction RD. The intermediate position may be set on an inner side than the center in the radial direction RD. The intermediate position may be selected depending on an installation range, weight, strength, etc. of the permanent magnet 20.

Both a plurality of long vertical walls 542a and a plurality of inner short vertical walls 542c are disposed on an inner range in the radial direction RD of the support plate 10. Only the plurality of long vertical walls 542a are disposed on an outer area in the radial direction RD of the support plate 10. Therefore, more vertical walls 42 are disposed on a partial portion in the radial direction RD on the support plate 10 than in the remaining portion. M pieces of the vertical walls 42 are disposed on the inner side in the radial direction RD of the support plate 10. L pieces of the vertical walls 42, which is less than M pieces, are disposed on the outer side in the radial direction RD of the support plate 10.

According to this embodiment, the number of the vertical walls 42 may be changed along the radial direction RD of the support plate 10. Specifically, the number of vertical walls 42 may be decreased from the inside to the outside. This provides the support plate 10 that has greater strength at its radially inner side than at its radially outer side. In this embodiment as well, the plurality of vertical walls 42 are provided by the plurality of long vertical walls 542a and the plurality of outer short vertical walls 542c. In this embodiment as well, the same effects as those of the preceding embodiments may be obtained.

### Sixth Embodiment

This embodiment is a modified embodiment of the preceding embodiment which is provided as a basic embodiment. In this embodiment, the plurality of vertical walls 42 include outer short vertical walls 642b disposed in only a partial range of the radial direction RD of the support plate 10. The outer short vertical wall 642b is provided only in an outer range of the support plate 10 in the radial direction RD.

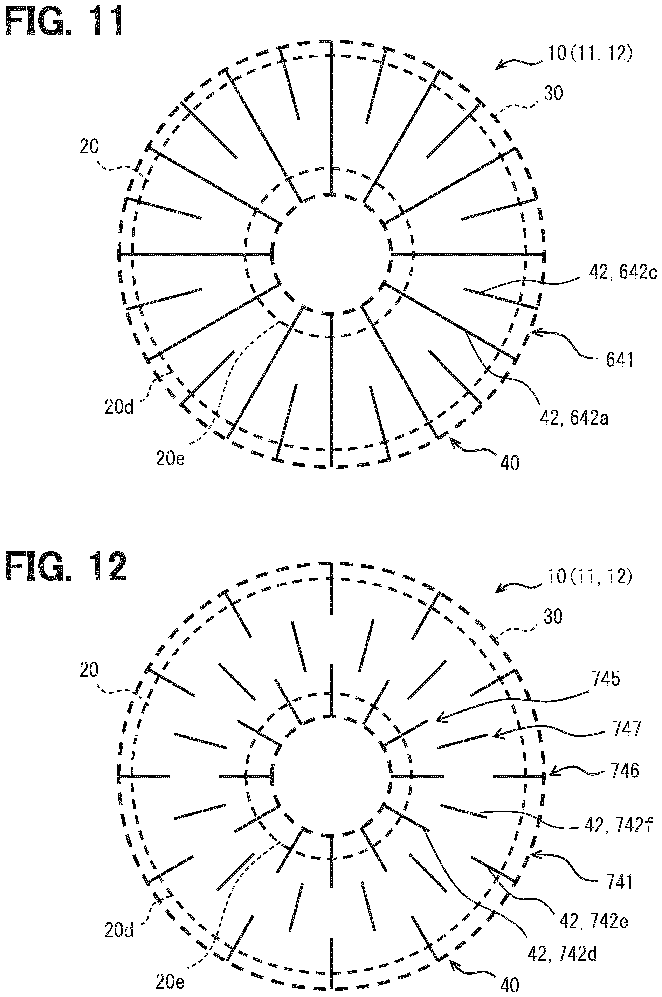

In FIG. 11, the inner core 40 includes one or more wall members 641. The wall members 641 provides a plurality of vertical walls 42. The wall member 641 may be provided by a cylindrical member, a plate-shaped member, or a strip member. The vertical walls 42 include a plurality of long vertical walls 642a and a plurality of outer short vertical walls 642b. The long vertical wall 642a extends in a long distance from the inner end to the outer end along the radial direction RD. The outer short vertical wall 642c extends a short distance from the outer end to an intermediate position along the radial direction RD. The intermediate position may be set on a center in the radial direction RD. The intermediate position may be set on an outer side than the center in the radial direction RD. The intermediate position may be set on an inner side than the center in the radial direction RD. The intermediate position may be selected depending on an installation range, weight, strength, etc. of the permanent magnet 20.

Both a plurality of long vertical walls 642a and a plurality of outer short vertical walls 642c are disposed on an outer range in the radial direction RD of the support plate 10. Only the plurality of long vertical walls 642a are disposed on an inner area in the radial direction RD of the support plate 10. Therefore, more vertical walls 42 are disposed on a partial portion in the radial direction RD on the support plate 10 than in the remaining portion. M pieces of the vertical walls 42 are disposed on the inner side in the radial direction RD of the support plate 10. N pieces of the vertical walls 42, which is greater than M pieces, are disposed on the outer side in the radial direction RD of the support plate 10.

According to this embodiment, the number of the vertical walls 42 may be changed along the radial direction RD of the support plate 10. Specifically, the number of vertical walls 42 may be increased from the inside to the outside. This provides the support plate 10 that has greater strength at its radially outer side than at its radially inner side. In this embodiment as well, the plurality of vertical walls 42 are provided by the plurality of long vertical walls 642a and the plurality of outer short vertical walls 642c. In this embodiment as well, the same effects as those of the preceding embodiments may be obtained.

### Seventh Embodiment

This embodiment is a modified embodiment of the preceding embodiment which is provided as a basic embodiment. In this embodiment, the plurality of vertical walls 42 are arranged apart from each other along the radial direction RD of the support plate 10.

In FIG. 12, the inner core 40 includes one or more wall members 741. The wall members 741 provides the plurality of vertical walls 42. The wall member 741 may be provided by a cylindrical member, a plate-shaped member, or a strip member. The plurality of vertical walls 42 are disposed apart from each other in the radial direction RD of the support plate 10. The plurality of vertical walls 42 are disposed in a scattered manner on the support plate 10. The plurality of vertical walls 42 may be referred to be disposed in a dispersed or intermittent manner.

The plurality of vertical walls 42 may be grouped into a plurality of groups 745, 746 and 747 arranged in a radial shape. The plurality of vertical walls 42 have an inner group 745 positioned on an innermost area in the radial direction RD. An inner group 745 has a plurality of inner short vertical walls 742d arranged in a radial shape. The plurality of vertical walls 42 have an outer group 746 positioned on an outermost area in the radial direction RD. An outer group 746 has a plurality of outer short vertical walls 742e arranged in a radial shape. The plurality of vertical walls 42 have a middle group 747 positioned on a middle area in the radial direction RD. The middle group 747 is positioned between the inner group 745 and the outer group 746. The middle group 747 has a plurality of middle short vertical walls 742f arranged in a radial shape.

The plurality of vertical walls 42 are disposed such that two vertical walls 42 adjacent to each other in the radial direction RD are not continuous in the radial direction RD. For example, the inner short vertical wall 742d and the middle short vertical wall 742f are disposed at positions offset by a predetermined angle with respect to the central axis AX. For example, the middle short vertical wall 742f and the outer short vertical wall 742e are disposed at positions offset by a predetermined angle with respect to the central axis AX. The inner short vertical wall 742d and the outer short vertical wall 742e are disposed on the same one of the radial direction RD, but are spaced apart from each other in the radial direction RD.

In the illustrated embodiment, the plurality of vertical walls 42 may be grouped into three groups. Alternatively, the plurality of vertical walls 42 may be disposed so as to be grouped into groups of two, four, five, and even more.

According to this embodiment, a plurality of vertical walls 42 may be disposed in a dispersed manner on the support plate 10. In this embodiment as well, the plurality of vertical walls 42 are provided by the plurality of inner short vertical walls 742d, the plurality of middle short vertical walls 742f, and the plurality of outer short vertical walls 742e. In this embodiment as well, the same effects as those of the preceding embodiments may be obtained.

### Eighth Embodiment

This embodiment is a modified embodiment of the preceding embodiment which is provided as a basic embodiment. In the preceding embodiments, the plurality of vertical walls 42 are spaced apart from each other in the circumferential direction CD or the radial direction RD. Alternatively, the plurality of vertical walls 42 are provided by a continuous wall that defines a plurality of cells 848 in this embodiment.

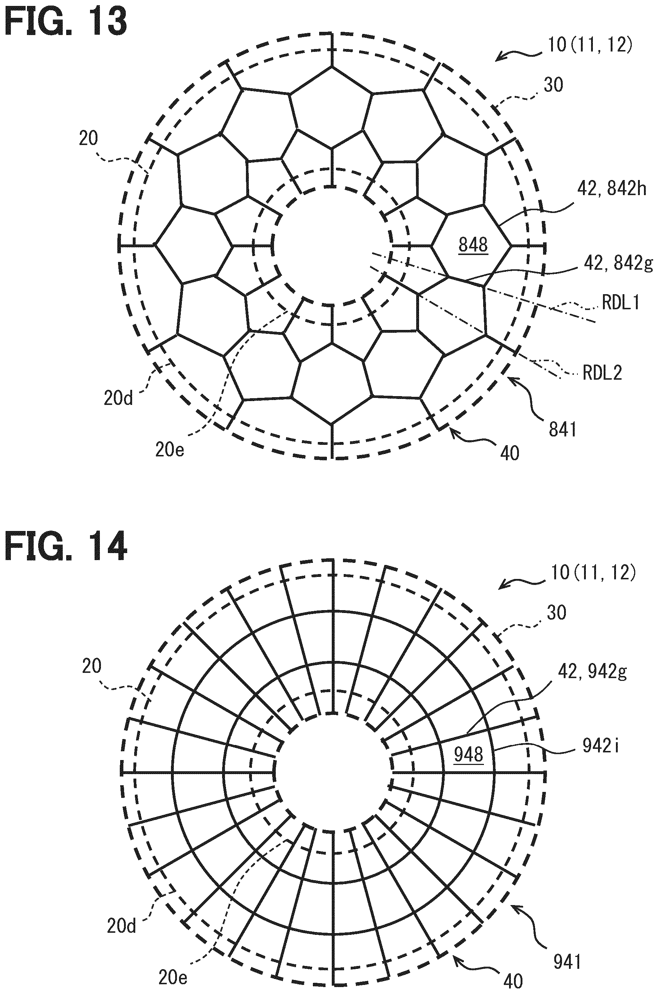

In FIG. 13, the inner core 40 includes a plurality of wall members 841 that define a plurality of cells 848. The wall member 841 is a porous body that defines a plurality of cells 848. The cell 848 is a polygonal shape with n or more sides. N is the natural number, e.g., 3 or more, or 4 or more. The polygonal shape has a shape having at least one side extending along the radial direction RD of the support plate 10. Preferably, the polygonal shape has two sides that are spaced apart from each other and extend along the radial direction RD of the support plate 10. Surface areas of the plurality of cells 848 positioned along one radial direction RD are set to gradually increase toward an outside in the radial direction RD. Surface areas of the plurality of cells 848 positioned along one circumferential direction CD are approximately equal along the circumferential direction CD. It should be noted that the term equal to is not intended to mean equal to in a mathematical sense. Equal includes tolerances that are acceptable in industry. The polygonal shape may be, e.g., a hexagonal shape. In this case, the wall member 841 is a so-called honeycomb member.

In a plane shown in FIG. 13, the wall member 841 provides a plurality of vertical walls 42 extending in linear shapes. The plurality of vertical walls 42 are disposed in a mesh-like shape. The plurality of vertical walls 42 may also be referred to as a plurality of short vertical walls. The plurality of vertical walls 42 include a plurality of radial vertical walls 842g and a plurality of intersecting vertical walls 842h. The plurality of radial vertical walls 842g extend along the radial direction RD. In the illustrated example, one radial vertical wall 842g is positioned on the first radial line RDL1. Two radial vertical walls 842g are positioned on the second radial line RDL2. The plurality of intersecting vertical walls 842h intersect at a predetermined angle with respect to the radial direction RD. The plurality of intersecting vertical walls 842h extend along a direction between the radial direction RD and the circumferential direction CD. The plurality of intersecting vertical walls 842h extend more or less along the circumferential direction CD. The plurality of intersecting vertical walls 842h extend so as to connect two radial vertical walls 842g adjacent in the circumferential direction CD. The intersecting vertical wall 842h is also called a circumferential vertical wall. The plurality of radial vertical walls 842g in this embodiment provide the plurality of vertical walls 42 (742d, 742f, 742e) in the embodiment shown in FIG. 12.

According to this embodiment, the plurality of vertical walls 42 may be disposed in a dispersed manner on the support plate 10. In this embodiment as well, a number of vertical walls 42 are provided. In this embodiment as well, the same effects as those of the preceding embodiments may be obtained.

### Ninth Embodiment

This embodiment is a modified embodiment of the preceding embodiment which is provided as a basic embodiment. In the above embodiment, the cells 848 are hexagonal shapes. Alternatively, the plurality of vertical walls 42 define cells 948 having quadrilateral shapes in this embodiment.

In FIG. 14, the inner core 40 includes a plurality of wall members 941 that define a plurality of cells 948. The cell 948 is a rectangular shape. The wall member 941 includes a plurality of radial vertical walls 942g and a plurality of circumferential vertical walls 942i. The plurality of radial vertical walls 942g extend along the radial direction RD. One radial vertical wall 942g extends continuously from the inner end to the outer end along the radial direction RD. The circumferential vertical wall 942i extends along the circumferential direction CD. The circumferential vertical wall 942i is one particular solution included in a concept of the intersecting vertical walls.

In this embodiment as well, the plurality of vertical walls 42 are provided. In this embodiment as well, the same effects as those of the preceding embodiments may be obtained.

### Tenth Embodiment

This embodiment is a modified embodiment of the preceding embodiment which is provided as a basic embodiment. In the above embodiments, one radial vertical wall 942g extends continuously from the inner end to the outer end along the radial direction RD. Alternatively, the vertical walls 42 are spaced apart from one another in this embodiment.

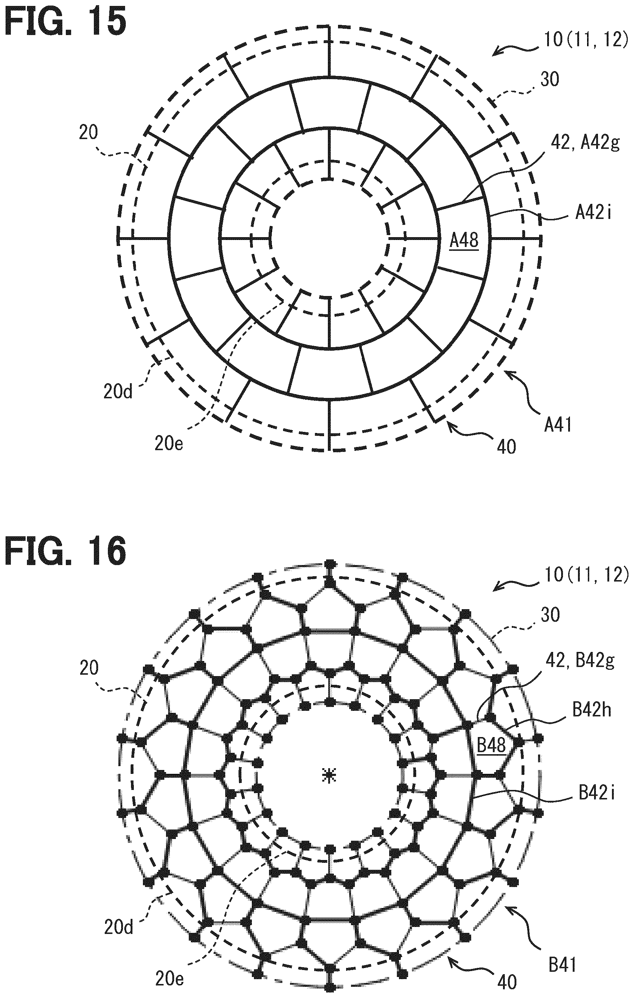

In FIG. 15, the inner core 40 includes a plurality of wall members A41 that define a plurality of cells A48. The cell A48 is a rectangular shape. The wall member A41 includes a plurality of radial vertical walls A42g and a plurality of circumferential vertical walls A42i. The circumferential vertical wall A42i is one particular solution included in a concept of the intersecting vertical walls. The plurality of radial vertical walls A42g in this embodiment provide the plurality of vertical walls 42 (742d, 742f, 742e) in the embodiment shown in FIG. 12.

In this embodiment as well, the plurality of vertical walls 42 are provided. In this embodiment as well, the same effects as those of the preceding embodiments may be obtained.

### Eleventh Embodiment

This embodiment is a modified embodiment of the preceding embodiment which is provided as a basic embodiment. In the preceding embodiments, the cells are quadrilateral shapes, or hexagonal shapes. Alternatively, the plurality of vertical walls 42 define cells B48 having pentagonal shapes in this embodiment.

In FIG. 16, the inner core 40 includes a plurality of wall members B41 that define a plurality of cells B48. The cell B48 is a pentagonal shape. The wall member B41 includes a plurality of radial vertical walls B42g, a plurality of intersecting vertical walls B42h, and a plurality of circumferential vertical walls B42i. The intersecting vertical wall B42h and the circumferential vertical wall B42i are included in the concept of intersecting vertical walls. The plurality of radial vertical walls B42g extend along the radial direction RD.

In this embodiment as well, the plurality of vertical walls 42 are provided. In this embodiment as well, the same effects as those of the preceding embodiments may be obtained.

### Twelfth Embodiment

This embodiment is a modified embodiment of the preceding embodiment which is provided as a basic embodiment. In the preceding embodiments, the wall member defines a plurality of cells arranged in a stacking manner in several stages along the radial direction RD. Alternatively, in this embodiment, the wall member C41 defines a plurality of rows of cells C48, which is far more than a few rows.

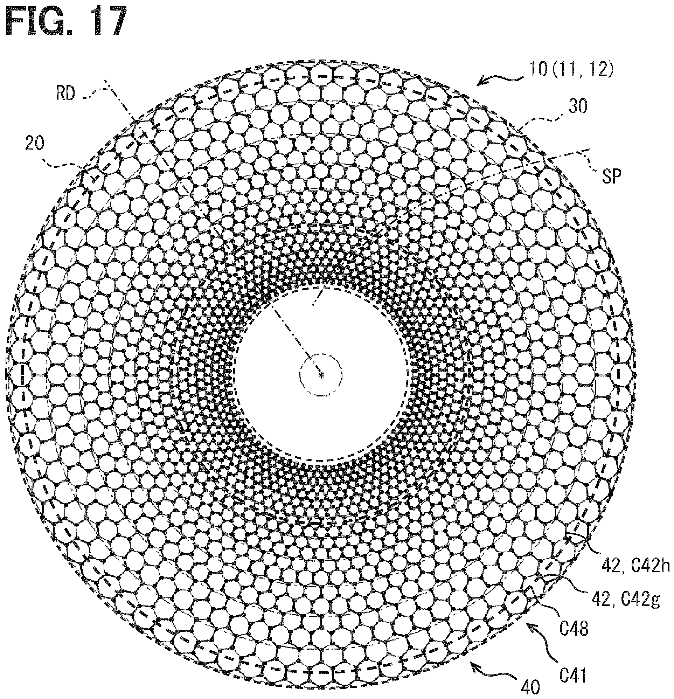

In FIG. 17, the inner core 40 includes a plurality of wall members C41 that define a plurality of cells C48. The plurality of cells C48 may be grouped into a plurality of layers in the radial direction RD. The plurality of layers are disposed in a stacking manner along the radial direction RD. In the illustrated example, the number of layers is 18. The number of layers of the plurality of cells is not limited to the number of layers shown in the drawing. The inner core 40 may include a variety of layers ranging from just a few layers to as many as 30-40 layers.

Surface areas of the plurality of cells C48 are gradually enlarged from an inside to an outside along the radial direction RD. The wall member C41 defines a plurality of cells C48 whose surface areas are gradually enlarged from an inside to an outside along the radial direction RD. The plurality of cells C48 are arranged along a spiral line SP. Surface areas of the plurality of cells C48 are gradually enlarged from an inside to an outside along the spiral line SP. The wall member C41 defines a plurality of cells C48 whose surface areas are gradually enlarged from an inside to an outside along the spiral line SP. The wall member C41 is disposed to provide a plurality of radial vertical walls C42g and a plurality of intersecting vertical walls C42h.

In this embodiment as well, the plurality of vertical walls 42 are provided. In this embodiment as well, the same effects as those of the preceding embodiments may be obtained.

### Thirteenth Embodiment

This embodiment is a modified embodiment of the preceding embodiment which is provided as a basic embodiment. This embodiment discloses a detailed structure of the wall members and a method for manufacturing the same.

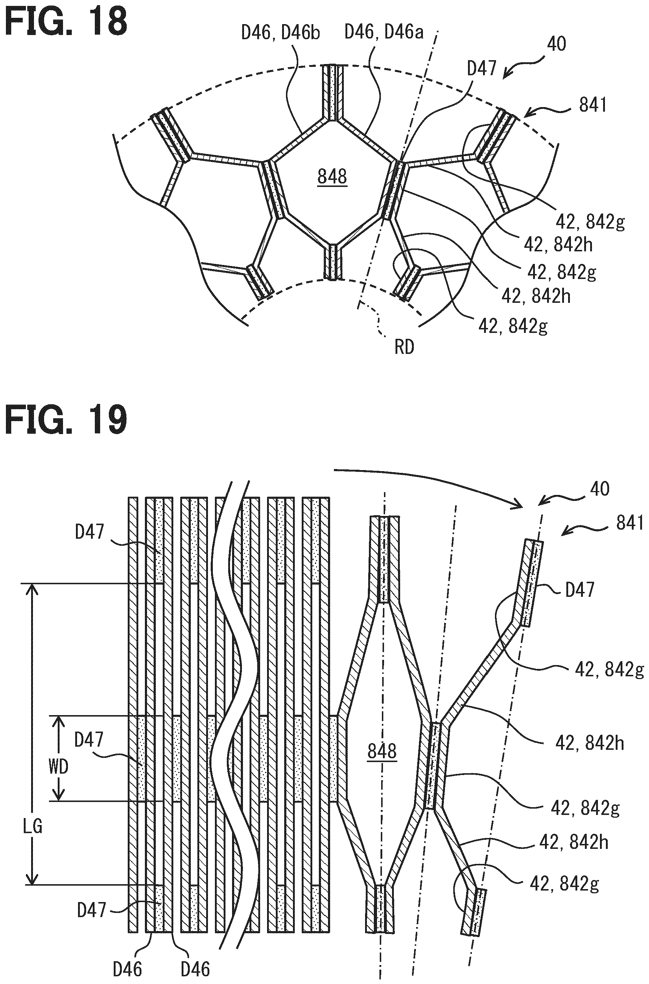

FIG. 18 shows an enlarged cross-sectional view of a portion of the embodiment shown in FIG. 13. In the drawing, the wall member 841 includes a radial vertical wall 842g and an intersecting vertical wall 842h. The radial vertical walls 842g and the intersecting vertical walls 842h are alternately disposed from an inside to an outside along the radial direction RD. The wall member 841 is formed by joining a plurality of strip members D46. In other words, the wall member 841 is an assembly of a plurality of strip members D46.

The strip member D46 is provided by a continuous material. The strip member D46 is bent along the radial direction RD to provide radial vertical walls 842g and intersecting vertical walls 842h in an alternating manner. In the illustrated example, a single one of the strip member D46 alternately provides, from an inside to an outside along the radial direction RD, a radial vertical wall 842g, an intersecting vertical wall 842h, a radial vertical wall 842g, an intersecting vertical wall 842h, and a radial vertical wall 842g. The plurality of strip members D46 include two types of strip members D46a and D46b. The strip member D46a and the strip member D46b are folded in different directions. The strip member D46a and the strip member D46b are folded in opposite directions. The strip member D46a and the strip member D46b are disposed to define a cell 848 therebetween. The strip member D46a and the strip member D46b are disposed on either side of a single radial direction RD so as to be a line symmetry.

A plurality of joining layers D47 are disposed between the plurality of strip members D46. The plurality of joining layers D47 join two radial vertical walls 842g positioned adjacent to each other in the circumferential direction CD. The joining layer D47 can be provided by various joining materials such as adhesive, brazing material, solder, etc.

FIG. 19 shows material at an intermediate stage in the manufacturing method of the inner core 40. The wavy lines slightly to the left of from a center in the drawing indicates an omission. The left side of the wavy line shows the material in the bonding process. An area to the right of the wavy line shows the material in an expanding step.

The manufacturing method of the inner core 40 includes a preparing step, an applying step, a joining step, an expanding step, and an assembling step. In the preparing step, a plurality of strip members D46 and a joining material are prepared. In the applying step, the joining material is applied to a plurality of strip members D46. In the joining step, a plurality of strip members D46 are stacked while being joined together with the joining material. In the expanding step, the plurality of strip members D46 in a stacked shape are expanded and shaped into a shape of the inner core 40. In the assembly step, the inner core 40 is joined to the first plate 31 and the second plate 32.

In the applying step, the joining material may be applied by various techniques such as coating or spraying. The joining material is applied to positions corresponding to the radial vertical walls 842g.

In the stacking step, the strip members D46 to which the joining material has been applied are stacked. The joining material forms a joining layer D47. In the stacking step, the joining material forming the joining layer D47 is cured. The joining layer D47 is disposed adjacent to the radial vertical wall 842g. The joining layer D47 is disposed between two adjacent strip members D46 and joins these two strip members D46 together. The joining layer D47 joins the two radial vertical walls 842g between the two strip members D46. As a result, the two radial vertical walls 842g are integrated together.

In the drawing, the plurality of cells 848 form a single layer. Alternatively, the plurality of cells 848 may be disposed in a plurality of layers, such as in the embodiment of FIG. 17. In this case, a plurality of joining layers D47 are disposed between adjacent strip members D46. In this case, each of the plurality of joining layers D47 has a width WD corresponding to a width of each of the plurality of radial vertical walls 842g. As a result, the width WD of each of the plurality of joining layers D47 increases stepwise from an inside to an outside along the radial direction RD. A gap LG between the plurality of joining layers D47 increases stepwise from an inside to an outside along the radial direction RD.

Furthermore, a plurality of joining layers D47 are disposed between two adjacent strip members D46 in a disposing pattern which is systematic. There are two types of disposing patterns between two adjacent strip members D46. The two types of disposing patterns are alternately repeated along a stacking direction of the plurality of strip members D46.

The right half of FIG. 19 shows a shape of an intermediate product in the expanding step. In the expanding step, the plurality of strip members D46 that were stacked and joined in the stacking step are expanded out in the stacking direction. In the expanding step, the plurality of strip members D46 are expanded from the stacked member while bending the strip members D46 to provide a plurality of radial vertical walls. In the expanding step, the plurality of strip members D46 are expanded in the circumferential direction CD by being pulled out from the stacked member so as to define a plurality of cells 848. In the expanding step, the plurality of strip members D46 are expanded out in the stacking direction so that the plurality of strip members D46 expanded define an annular shape. Here, the plurality of joining layers D47 have the width WD and the gap LG described above, and are disposed in the two types of disposing patterns described above, so that they extend along an annular shape. In the expanding step, the wall member 841 is shaped so that the plurality of radial vertical walls 842g are arranged along the radial direction RD.

As a result, the step of assembling the support plate 30 includes a stacking step of stacking a plurality of strip members D46 so as to be joined by a plurality of joining layers D47. The step of assembling the support plate 30 includes an expanding step in which the plurality of strip members D46 are expanded in the circumferential direction CD while being bent from the stacked member formed in the stacking step, to form the inner core 40 having an annular shape. The step of assembling the support plate 30 includes a step of joining the inner core 40 and the end plate 30.

The plurality of radial vertical walls 842a form predetermined gaps in the circumferential direction CD. This gap is relatively narrow at an inner portion in the radial direction RD and relatively wide at an outer portion in the radial direction RD. In the expanding step, the plurality of strip members D46 are bent to provide a gap relationship in the circumferential direction CD between the plurality of radial vertical walls 842g.

In this embodiment, the inner core 40 is efficiently manufactured by a manufacturing method in which a plurality of strip members D46 are stacked, joined, and expanded. In this embodiment as well, the plurality of vertical walls 42 are provided. In this embodiment as well, the same effects as those of the preceding embodiments may be obtained.

### Other Embodiments

The disclosure in this specification, the drawings, and the like is not limited to the exemplified embodiments. The disclosure includes the illustrated embodiments and variations thereof by those skilled in the art. For example, the present disclosure is not limited to the combinations of components and/or elements shown in the embodiments. The disclosure may be provided in various combinations. The disclosure may include additional portions that can be added to the embodiments. The disclosure includes those in which the components and/or elements of the embodiments are omitted. The disclosure includes the reallocation or combination of components and/or elements between one embodiment and another embodiment. The disclosed technical scope is not limited to the descriptions of the embodiments. It should be understood that part of disclosed technical scope is indicated by recitation of claims, and includes every modification within the equivalent meaning and the recitation of the scope of claims.

The disclosure in the specification, drawings and the like is not limited by the description of the claims. The disclosures in the specification, the drawings, and the like encompass the technical ideas described in the claims, and further extend to a wider variety of technical ideas than those in the claims. Hence, various technical ideas can be extracted from the disclosure of the specification, the drawings, and the like without being bound by the description of the claims.

In the preceding embodiments, the two rotors 6 are disposed in a distributed manner so as to face both end surfaces of one stator 7. Alternatively, two stators may be disposed in a distributed manner so as to face both end surfaces of one rotor. This configuration may be found in JP2021-136777Aas Patent Literature 1. The disclosure of JP2021-136777A is incorporated herein by reference to explain technical elements presented herein.

In the preceding embodiments, the support plate 10 has the end plates 30 joined to both end surfaces of the inner core 40. Alternatively, the end plate 30 may be joined to only one end surface of the inner core 40. For example, in the embodiment of FIG. 6, only the first plate 31 or the second plate 32 may be joined to the inner core 40. In this case, a wall that is continuous in the circumferential direction CD is also provided on the other end surface by the plurality of lateral walls 43. Therefore, a configuration in which the end plate 30 is provided on at least one end surface of the inner core 40 may be adopted.

The previous embodiments include a plurality of cells in quadrilateral shapes, pentagonal shapes, and hexagonal shapes. Alternatively, the cells may include a plurality of N-sided cells, where N is the natural number equal to or greater than three. For example, the cells may include a plurality of cells in triangular shapes. For example, a wall member that defines a plurality of cells, which includes a combination of a plurality of hexagonal shapes and a plurality of triangular cells may be adopted. The plurality of cells may also include a plurality of cells having polygonal shapes with seven or more sides. For example, the wall member may include a plurality of cells having various polygonal shapes such as seven, eight, nine, ten, etc.

### (Disclosure of Technical Idea)

This description discloses a plurality of technical concepts described in a plurality of sections listed below. Some sections may be presented in a multiple dependent form in which a subsequent section refers to the preceding sections selectively. Moreover, some sections may be written in a multiple dependent form referring to another multiple dependent form. These sections written in the multiple dependent form define multiple technical ideas.

### (Technical Idea 1)

An axial gap type rotary electric machine, comprising:
a stator (7) and a rotor (6) which are magnetically coupled in an axial gap in an axial direction, wherein
the rotor includes:

a permanent magnet (20) disposed to face the axial gap; and
a support plate (10) disposed behind the permanent magnet, wherein
the support plate is positioned behind the permanent magnet, is disposed in a rotationally symmetrical with respect to a central axis (AX) of the rotor, and has a plurality of vertical walls (42) extending in the axial direction.

### (Technical Idea 2)

The axial gap type rotary electric machine according to Technical Idea 1, wherein the plurality of vertical walls are disposed in a radial shape so that each of the vertical walls extends along a radial direction (RD).

### (Technical Idea 3)

The axial gap type rotary electric machine according to Technical Idea 1 or 2, wherein the support plate includes:
an inner core (40) having the plurality of vertical walls; and
an end plate (30) joined to at least one end surface of the inner core.

### (Technical Idea 4)

The axial gap type rotary electric machine according to any one of Technical Ideas 1-3, wherein the plurality of vertical walls include a plurality of radial vertical walls (42a, 242a, 342a, 442a, 542a, 542b, 642a, 642c, 742d, 742e, 742f, 842g, 942g, A42g, B42g, C42g) extending along the radial direction (RD).

### (Technical Idea 5)

The axial gap type rotary electric machine according to Technical Idea 4, wherein the plurality of vertical walls include only the plurality of radial vertical walls (42a, 242a, 342a, 442a, 542a, 542b, 642a, 642c, 742d, 742e, 742f).

### (Technical Idea 6)

The axial gap type rotary electric machine according to Technical Idea 5, wherein the inner core includes a plurality of cylindrical members (41) disposed in a radial shape along a circumferential direction.

### (Technical Idea 7)

The axial gap type rotary electric machine according to Technical Idea 4, wherein the plurality of vertical walls include:
the plurality of radial vertical walls (42a, 242a, 342a, 442a, 542a, 542b, 642a, 642c, 742d, 742e, 742f); and
a plurality of intersecting vertical walls (842h, 942i, A42i, B42h, B42i, C42h) extending in a direction intersecting the radial vertical wall.

### (Technical Idea 8)

The axial gap type rotary electric machine according to Technical Idea 4 or 7, wherein the inner core includes:
a wall member (841, 941, A41, B41, C41) which defines a plurality of cells (848, 948, A48, B48, C48) having N-sided shapes, where N is the natural number of 3 or more, by the plurality of vertical walls in a cross section perpendicular to a central axis (AX), wherein
at least one of the plurality of vertical walls that defines the cells is the radial vertical wall (842g, 942g, A42g, B42g, C42g).

### (Technical Idea 9)

The axial gap type rotary electric machine according to Technical Idea 8, wherein the plurality of cells include hexagonal cells (848, C48).

### (Technical Idea 10)

A method of manufacturing the axial gap type rotary electric machine according to any one of Technical Ideas 1-9, the method comprising:
assembling the support plate;
connecting the support plate and the permanent magnet to assemble the rotor; and
assembling the rotary electric machine by facing the rotor and the stator at the axial gap, wherein
the step of assembling the support plate includes:
   stacking step of stacking a plurality of strips (D46) so as to be joined by a plurality of joining layers (D47);
   expanding step of expanding the plurality of strips from a stacked member obtained by the stacking step in a circumferential direction (CD) while bending the plurality of strips to form an inner core (40) having an annular shape; and step of joining the inner core and an end plate (30).

## Claims

1. An axial gap type rotary electric machine, comprising:
a stator (7) and a rotor (6) which are magnetically coupled in an axial gap in an axial direction, wherein
the rotor includes:
a permanent magnet (20) disposed to face the axial gap;
a support plate (10) disposed behind the permanent magnet, wherein
the support plate is positioned behind the permanent magnet, is disposed in a rotational symmetry with respect to a central axis (AX) of the rotor, and has a plurality of vertical walls (42) extending in the axial direction.

2. The axial gap type rotary electric machine according to claim 1, wherein
the plurality of vertical walls are disposed in a radial shape so that each of the vertical walls extends along a radial direction (RD).

3. The axial gap type rotary electric machine according to claim 2, wherein
the support plate includes:
an inner core (40) having the plurality of vertical walls; and
an end plate (30) joined to at least one end surface of the inner core.

4. The axial gap type rotary electric machine according to claim 3, wherein
the plurality of vertical walls include a plurality of radial vertical walls (42a, 242a, 342a, 442a, 542a, 542b, 642a, 642c, 742d, 742e, 742f, 842g, 942g, A42g, B42g, C42g) extending along a radial direction (RD).

5. The axial gap type rotary electric machine according to claim 4, wherein
the plurality of vertical walls include only the plurality of radial vertical walls (42a, 242a, 342a, 442a, 542a, 542b, 642a, 642c, 742d, 742e, 742f).

6. The axial gap type rotary electric machine according to claim 5, wherein
the inner core includes a plurality of cylindrical members (41) disposed in a radial shape along a circumferential direction.

7. The axial gap type rotary electric machine according to claim 4, wherein
the plurality of vertical walls include:
the plurality of radial vertical walls (42a, 242a, 342a, 442a, 542a, 542b, 642a, 642c, 742d, 742e, 742f); and
a plurality of intersecting vertical walls (842h, 942i, A42i, B42h, B42i, C42h) extending in a direction intersecting the radial vertical wall.

8. The axial gap type rotary electric machine according to claim 4, wherein
the inner core includes a wall member (841, 941, A41, B41, C41) which defines a plurality of cells (848, 948, A48, B48, C48) having N-sided shapes, where N is the natural number of 3 or more, by the plurality of vertical walls in a cross section perpendicular to a central axis (AX), wherein
at least one of the plurality of vertical walls that defines the cells is the radial vertical wall (842g, 942g, A42g, B42g, C42g).

9. The axial gap type rotary electric machine according to claim 8, wherein
the plurality of cells include hexagonal cells (848, C48).

10. A method of manufacturing the axial gap type rotary electric machine according to any one of claims 1-9, the method comprising:
assembling the support plate;
connecting the support plate and the permanent magnet to assemble the rotor; and
assembling the rotary electric machine by facing the rotor and the stator at the axial gap, wherein
the step of assembling the support plate includes:
stacking step of stacking a plurality of strips (D46) so as to be joined by a plurality of joining layers (D47);
expanding step of expanding the plurality of strips from a stacked member obtained by the stacking step in a circumferential direction (CD) while bending the plurality of strips to form an inner core (40) having an annular shape; and
step of joining the inner core and an end plate (30).
